# EUROPÄISCHE PATENTSCHRIFT

(11) **EP 2 285 716 B1**
(45) Veröffentlichungstag und Bekanntmachung des Hinweises auf die Patenterteilung: **20.11.2013**
(21) Anmeldenummer: 09741815.6
(22) Anmeldetag: 24.04.2009
(51) Int. Cl.: B65G 47/84

(54) **SÄGEZAHNSTERN MIT VORRICHTUNG ZUR FIXIERUNG EINES FLASCHENHALSES**
SAW-TOOTH SPIDER ELEMENT WITH DEVICE FOR FIXING A BOTTLE NECK
TOURNIQUET A DENTS DE SCIE AVEC DISPOSITIF DE FIXATION D'UN COL DE BOUTEILLE

(30) Priorität: 07.05.2008 DE 102008022705
(43) Veröffentlichungstag der Anmeldung: 23.02.2011
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2009/003002
(87) Internationale Veröffentlichungsnummer: WO 2009/135596

(56) Entgegenhaltungen:
- EP-A- 0 927 683
- DE-A1- 10 140 315
- FR-A- 1 196 430
- FR-A- 2 824 541
- FR-A1- 2 736 299
- US-A- 4 388 989
- US-A1- 2003 106 778

## Beschreibung

Die Erfindung richtet sich auf eine Vorrichtung zur Fixlerung eines Flaschenhalses In einem Sägezahnstern einer Flaschenabfüllanlage, Insbesondere von PET-Flaschen.

Am Einlauf derartiger Abfüllanlagen wird in der Regel eln Förderelement vorgesehen, welches als sogenannter Sägezahnstern ausgestaltet Ist. Dieser Stern ist in der Regel unmittelbar hinter der Einlaufscheibe vorgesehen, wobei der Stern die von der Einlaufscheibe beschleunigten Flaschen auf Teilung bringt (DE 697 28 396 T2).

Es hat sich gezeigt, dass die einlaufenden Flaschen teilweise zu tanzen beginnen und ggf. die gewünschte Teilung verlieren, so dass es zu Zerstörungen kommen kann, beispielsweise an den Greifarmen der für die Flaschen vorgesehenen Greifer.

Aus der EP 0 927 683 A1 ist eine gattungsgemäße Einlaufscheibe bekannt, bel der Beutelverpackungen mittels eines federbelasteten Schwenkhebels fixiert werden, wozu dieser Schwenkhebel über eine Steuerkurve vor Aufnahme der Behälter geöffnet werden muss. Eine vergleichbare Vorrichtung ist aus der FR 2 824 641 A1 bekannt. Nachteilig hierbei ist, dass die Synchronisation von Flaschenübemahme und Taschenverachiuss, diese Systeme konstruktiv aufwändig macht und diese somit für sehr hohe Leistungen nicht geeignet sind.

Hier setzt die Erfindung an, deren Aufgabe darin besteht, eine passive, exakte Zentrierung bzw. Fixierung der einlaufenden Flaschen in den Sägezahnstern zu erreichen bei gleichzeitiger Beruhigung der Eigenbewegung.

Mit einer Vorrichtung der eingangs bezeichneten Art wird diese Aufgabe gemäß der Erfindung dadurch gelöst, dass jedem Sägezahnausschnitt an der der etwa radial ausgerichteten Anlagekante gegenüberliegenden Seite des Sägezahnausschnittes ein federbelastetes Klingenelement zugeordnet ist.

Mit einem derartigen federbelasteten Klingenelement wird erreicht, dass der Flaschenhals exakt in die Anlaufkante des Sägezahnausschnittes gedrückt wird, womit sich automatisch eine exakte Einhaltung der Teilungsabstände ergibt. Gleichzeitig wird erreicht, dass eine evtl. tanzende oder vibrierende Flasche durch diese festere Fixierung in ihrer Bewegung beruhigt wird.

Ausgestaltungen der Erfindung ergeben sich aus den Unteransprüchen. Dabei kann beispielsweise vorgesehen sein, dass das Klingenelement im stirnseitigen Bereich eine Einlaufschräge aufweist, was die Übernahme der in den Sägezahnstern einlaufenden Flaschen erleichtert.

Erfindungsgemäß ist das Klingenelement in seitlichen Schienen am Sägezahnstern geführt, wobei diese Führungsschienen auch als integraler Bestandteil des Sägezahnsternes selbst ausgebildet sein können.

Vorteilhaft weist das Klingenelement eine Anschlaglasche für eine Druckfeder an dem der Einlaufseite gegenüberliegenden Ende auf. Damit ist eine einfache technische Verwirklichung der Federbelastung eines entsprechenden Klingenelementes gewährleistet, wobei gleichzeitig erreicht ist, dass evtl. beschädigte Federn leicht ausgewechselt werden können.

Grundsätzlich kann das Klingenelement mit einem Anschlag versehen sein. Es ist dabei erfindungsgemäß vorgesehen, dass die Feder ein Wegbegrenzungselement aufweist.

Erfindungsgemäß ist das Klinkenelement derart im Sägezahnstern eingebettet, dass seine Wirkkante der Anlagekante des jeweiligen Sägezahnausschnittes gegenüberliegt.

Weitere Merkmale, Einzelheiten und Vorteile der Erfindung ergeben sich aufgrund der nachfolgenden Beschreibung sowie anhand der Zeichnung. Diese zeigt in
Fig. 1 eine Aufsicht auf den Einlaufbereich einer Flaschenabfüllanlage mit einem Sägezahnstern nach dem Stand der Technik,
Fig. 2 eine räumliche Darstellung des erfindungsgemäßen Sägezahnsternes von oben sowie in
Fig. 3 einen Teilausriss in räumlicher Darstellung eines Bereiches des Sägezahnsternes in Unteransicht.

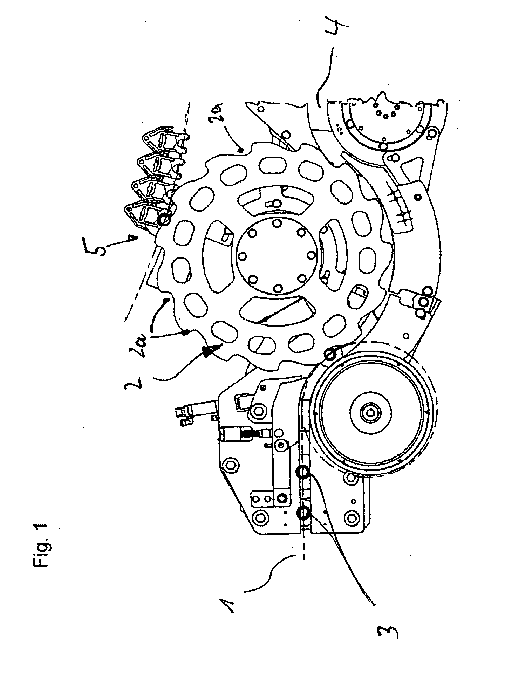

In Fig. 1 ist in Aufsicht der mit 1 bezeichnete Einlauf einer beispielsweise Flaschenabfüllanlage dargestellt, wobei dort ein Sägezahnstern, allgemein mit 2 bezeichnet, vorgesehen ist, der Flaschen auf Teilung bringt, wobei die einlaufenden Flaschen mit 3 bezeichnet sind.

Die vom Sägezahnstern auf Teilung gebrachten Flaschen können, je nach Konstruktion, einem Bypass 4 zugeführt werden oder direkt einem nur andeutungsweise wiedergegebenen Rinser 5, worauf es hier nicht näher ankommt.

Jeder Sägezahnausschnitt, in den Figuren mit 2a bezeichnet, weist eine etwa radial ausgerichtete Anlagekante 6 auf und eine geschwungene gegenüberliegende Seite 7.

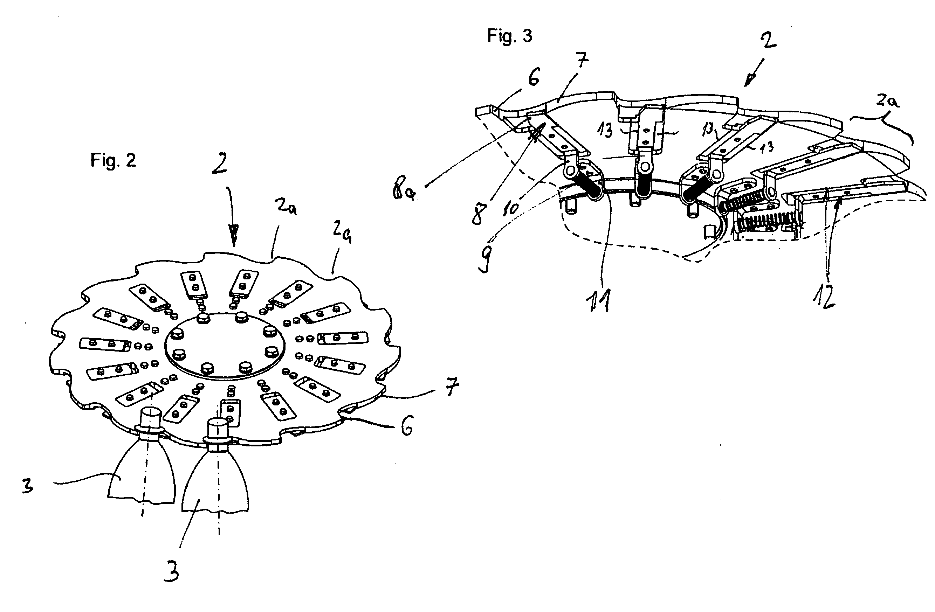

Etwa im inneren Einlaufbereich der Seite 7 des Sägezahnausschnittes 2 ist ein Klingenelement 8 auf der Unterseite des Sägezahnsternes 2 vorgesehen, der von einer Druckfeder 9 beaufschlagt ist, die das Klingenelement nach außen treibt. Zur Fixierung der Feder 9 weist das Klingenelement eine Anschlaglasche 10 auf, während an der Unterseite des Sägezahnsternes 2 ein weiteres Laschenelement 11 fixiert ist, wobei die Feder 9 zwischen den beiden Laschenelementen 10 und 11 eingespannt ist, wie sich dies insbesondere aus Fig. 3 ergibt.

Nicht näher dargestellt ist dabei, dass entweder in der Führung der Feder 9 oder am Klingenelement 8 Wegbegrenzungsmittel vorgesehen sind, die dafür sorgen, dass das Klingenelement 8 nicht zu weit nach außen geschoben wird.

Wie auch aus Fig. 2 ersichtlich, werden beim Einführen der Hälse der Flaschen 3 diese durch das Klingenelement 8, das im vorderen Bereich eine schräggestellte Wirkkante 8a aufweist, gegen die Anschlagkante 6 gedrückt, so dass eine exakte Teilung aufgrund der Teilung der Sägezahnabschnitte 2a sichergestellt ist. Gleichzeitig wird die Flasche 3 so fixiert, dass sie keine ungewollten Zusatzbewegungen beim Weitertransport ausführen kann.

Die Klingenelemente 8 sind seitlich in Schienen 13 im Bereich der Unterseite des Sägezahnsternes 2 etwa radial verschiebbar geführt.

Zur Ausübung des Anpressdruckes des Flaschenhalses kann mit Hilfe der Einlaufschräge 8a am Klingenelement 8 gegen die Anlagekante 6 die Feder 9 wirken. Die Feder 9 ist zwischen einer Anschlaglasche 10 am Klingenelement einerseits und einer Anschlaglasche 11 andererseits, die ortsfest an der Unterseite des Sägezahnsternes 2 jeweils fixiert ist, eingespannt. Hierbei können Wegbegrenzungsmittel vorgesehen sein, was in den Figuren nicht näher dargestellt ist, sei es, dass das Klingenelement 8 entsprechende Anschläge oder Wülste aufweist oder der Federweg auf andere Weise begrenzt ist.

Wie sich aus Fig. 3 ergibt, sind die Klingenelemente 8 in Nuten, allgemein mit 12 bezeichnet, die in der Unterseite des Sägezahnsternes 2 eingebracht sind, positioniert.

Natürlich ist das beschriebene Ausführungsbeispiel der Erfindung wie beansprucht noch in vielfacher Hinsicht abzuändern, ohne den Grundgedanken zu verlassen. So ist insbesondere die Art der Federung der Fixierung sowie der Führung der Klingenelemente 8 nicht auf die dargestellte technische Lösung beschränkt, hier können andere äquivalente Lösungen vorgesehen sein.

## Patentansprüche

1. Sägezahnstern mit Vorrichtung zur Fixierung eines Flaschenhalses einer Flaschenabfüllanlage, insbesondere von PET-Flaschen,
wobei das Sägezahnstern Sägezahnausschnitte (2a) aufweist und jeder Sägezahnausschnitt (2a) eine etwa radial ausgerichtete Anlagekante (6) aufweist,
wobei jedem Sägezahnausschnitt (2a) an der der etwa radial ausgerichteten Anlagekante (6) gegenüberliegenden Seite (7) des Sägezahnausschnittes (2a) ein federbelastetes Klingenelement (8) zugeordnet ist,
**dadurch gekennzeichnet, dass** das Klingenelement (8) seitlich in Schienen (13) im Bereich der Unterseite des Sägezahnsternes (2) etwa radial verschiebbar geführt ist,
wobei das Klingenelement (8) von einer Druckfeder (9) beaufschlagt ist, die das Klingenelement (8) nach außen treibt,
und wobei das Klingenelement (8) im stirnseitigen Bereich eine Einlaufschräge (8a) aufweist, und derart im Sägezahnstern (2) eingebettet ist, dass die Einlaufschräge (8a) der Anlagekante (6) des jeweiligen Sägezahnausschnittes (2a) gegenüberliegt,
so dass mittels der Einlaufschräge (8a) der Flaschenhals gegen die Anlagekante (6) des Sägezahns gedrückt wird.

2. Vorrichtung nach einem der vorangehenden Ansprüche, **dadurch gekennzeichnet, dass** das Klingenelement (8) eine Anschlaglasche (10) für die Druckfeder (9) an dem der Einlaufseite gegenüberliegenden Ende aufweist.

3. Vorrichtung nach einem der vorangehenden Ansprüche, **dadurch gekennzeichnet, dass** die Feder (9) ein Wegbegrenzungselement aufweist.

## Claims

1. Device for fixing a bottle neck in a saw-tooth spider element of a bottle filling installation, in particular PET bottles,
wherein the saw-tooth spider element has saw-tooth sections (2a) and each saw-tooth section (2a) has an approximately radially oriented contact edge (6),
wherein a spring-loaded blade element (8) is assigned to each saw-tooth section (2a) on the side (7) of the saw-tooth section (2a) lying approximately opposite the radially oriented contact edge (6),
**characterised in that** the blade element (8) is guided laterally in rails (13) in the region of the underside of the saw-tooth spider element (2), in approximately radially adjustable manner,
wherein a compression spring (9) acts on the blade element (8), said compression spring driving the blade element (8) outwards,
and wherein the blade element (8) has a lead-in chamfer (8a) in the frontal region and is embedded in the saw-tooth spider element (2) such that the lead-in chamfer (8a) is opposite the contact edge (6) of the particular saw-tooth section (2a),
so that, by means of the lead-in chamfer (8a), the bottle neck is pressed against the contact edge (6) of the saw tooth.

2. Device according to the preceding claim, **characterised in that** the blade element (8) has a stop tab (10) for the compression spring (9) at the end opposite the inlet side.

3. Device according to any one of the preceding claims, **characterised in that** the spring (9) has a travel limiting element.

## Revendications

1. Tourniquet en dents de scie avec dispositif de fixation d'un col de bouteille d'une installation de mise en bouteilles, en particulier de bouteilles en PET, le tourniquet en dents de scie présentant des découpes en dents de scie (2a) et chaque découpe en dents de scie (2a) présentant un bord d'appui (6) orienté approximativement de façon radiale, un élément à lame (8) chargé par ressort étant affecté à chaque découpe en dents de scie (2a) sur le côté (7) de la découpe en dents de scie (2a) qui est en face du bord d'appui (6) orienté approximativement de façon radiale,
**caractérisé en ce que** l'élément à lame (8) est guidé, de façon mobile approximativement radialement, latéralement dans des rails (13) dans la zone du côté inférieur du tourniquet en dents de scie (2),
l'élément à lame (8) étant soumis à l'action d'un ressort de compression (9) qui déplace l'élément à lame (8) vers l'extérieur,
etl'élément à lame (8) présentant, dans la zone côté frontal, un biseau d'entrée (8a) et étant intégré dans le tourniquet en dents de scie (2) de telle sorte que le biseau d'entrée (8a) est en face du bord d'appui (6) de la découpe en dents de scie (2a) respective,
de telle sorte que, au moyen du biseau d'entrée (8a), le col de bouteille est pressé contre le bord d'appui (6) de la dent de scie.

2. Dispositif selon une des revendications précédentes, **caractérisé en ce que** l'élément à lame (8) présente une patte de butée (10) pour le ressort de compression (9) sur le côté qui est en face du côté d'entrée.

3. Dispositif selon une des revendications précédentes, **caractérisé en ce que** le ressort (9) présente un élément de limitation de course.
